# EUROPEAN PATENT APPLICATION

(11) **EP 3 564 630 A1**
(43) Date of publication of application: **06.11.2019**
(21) Application number: 19172164.6
(22) Date of filing: 02.05.2019
(51) Int. Cl.: G01D 11/30, G01F 23/28

(54) **SENSOR CASE**

(30) Priority: 02.05.2018 SK 500432018 U
(71) Applicant: Sensoneo j. s. a., 841 06 Bratislava (SK)
(72) Inventor: Basila, Martin, 841 06 Bratislava (SK)
(74) Representative: Litváková a spol., s.r.o.

(57) **Abstract**

Sensor case intended for adjustable positioning of the sensor, mainly for measurement of object content comprising upper cover (2) with an opening (5) for measurement beam of the sensor, central cover (3) intended for storage of the sensor with an opening (5) for the measurement beam of the sensor, movable element (1) shaped as hollow spherical segment with openings (6) for the measurement beam of the sensor, wherein the upper cover (2) and the central cover (3) are interlocked via a dismountable link, so that the opening (5) for the measurement beam of the sensor in the upper cover (2) and the opening (5) for the measurement beam of the sensor in the central cover (3) are aligned above each other and the space between the upper cover (2) and the central cover (3) is adapted, in its size and shape, for rotary articulated placement of the movable element (1) under the upper cover (2).

## Description

### Technical Field

This technical solution relates to sensor case intended for adjustable positioning of the sensor, for measurement of object content, in particular for use in the waste management and belongs to the field of measuring technology.

### Background Art

Many fields of industry and services require determination of current load of containers with liquid or solid content, such as garbage cans, water reservoirs, oil reservoirs, hoppers, silos, etc. Such information is obtained via sensors, which are preferably used for automatic data collection and optimization of related processes.

Mainly with containers holding solid contents, the height of their contents must be measured using a contactless method. Sensors using ultrasound, laser, radar, infrared radiation beam, microwave radiation, etc. are placed in the way that they emit beams directed at the center of the base of the measured container, which ensures the most preferable height of filling. This is achieved by mounting the sensor to the upper cover of the container. In cases when sensor cannot be mounted to the upper cover, lid, or hood of the container or when it is not preferable, e.g. because the container does not have upper cover, lid, or hood, or when there is justified concern that user could leave the upper cover open, the sensor must be placed on the side wall of the container. The current state is that placing the sensor on the wall of the container requires a mounting bracket.

Use of a mounting bracket to place sensor in a container in order to measure the filling of the container has several disadvantages:
For durability, the mounting bracket is usually made of metal, which has negative impact on the intensity and quality of signal transmission, used by the sensor to connect to data network (IoT networks, GSM networks and the like).

Mounting bracket causes the whole assembly protruding into the inner space, which increases the risk of sensor contamination of the sensor during dumping of the container, at the same time reducing the space available to drop the waste in. Space available for waste dropping must be as large as possible especially for smaller containers, such as garbage cans in streets, at public transport stops, food courts, etc. For this reason, use of mounting brackets to attach sensors is unfavorable, especially in such small containers.

Mounting bracket increases costs of measurement of container load and it has to be custom made for each type of container.

Mounting bracket limits the change of beam direction to around a single axis. If sensor beam direction needs to be adjusted, this is only possible via difficult bending of the mounting bracket.

If mounting bracket is not used, e.g. if sensor is directly attached to the upper cover or upper portion of the container, this will limit any possible change in beam direction if the beam is adversely reflected from the inner structure of the measured container.

If sensor is mounted incorrectly and the measurement beam is projected onto the container wall or a place different than intended, the whole sensor must be dismounted and replaced, or relocated, or the mounting bracket has to be adjusted, which often only allows rotation in horizontal plane. Therefore, it is desired to look for solutions that would facilitate flexible pointing of the measurement beam without the need for relocation of the whole sensor.

Patent document GB 2402737 describes a photoelectric sensor for determining a fill- level of the waste containers and a system for transmitting of fill-level signals to plan more efficient container emptying routes. The photoelectric sensor is placed on an inner surface of the container and housed in a robust case, which protects the sensor against the material being deposited in the container. The sensor may be located at a specific angle, but the patent document does not address its adjustment method and possibility to change the adjustment.

Patent document GB 2510558 describes a sensor secured to the upper portion of a containers by a mount, which includes a thermal barrier between the sensor itself and the surface to which it is attached. The solution also includes a method of firmly securing the sensor, preferably to the upper cover of the container. The possibility to change the adjustment of a sensor beam is not solved in the patent document.

Patent document US 2017/284854 describes a portable device comprising a processor, a tilt sensor and a display device placed on a surface of the container, which orients the sensor for measuring a fill-level in such a way that a measuring beam is pointing to the desired place, wherein said being achieved by tilting the portable device. Disadvantage of this method of a sensor beam orientation lies in a need for an external device.

Presently, most attention has been paid to more efficient and less expensive waste collecting from garbage cans, both in public and households. Sensors measure the load of containers, send the information to a network, and garbage management is rationalized. Garbage is collected as needed, which saves both time and finance cost of fill control, at least for less frequently used garbage cans.

Considering the commonly used contactless sensors sensing the load of containers, it is desired to look for solutions with adjustable beam direction that facilitate easy manipulation with sensors and eliminate the need for use of mounting bracket, which would constitute several disadvantages. This would reduce overall costs of maintenance and the actual bracket and improve the sensor usage parameters, which could be utilized mainly in collecting garbage from cans.

### Nature of Invention

The aforementioned drawbacks can be eliminated, to a significant extent, by sensor case intended for adjustable positioning of the sensor, mainly for measurement of object content according to this technical solution, which is based on the principle that it includes a upper cover with opening for measurement beam of the sensor, central cover intended for placing the sensor and incorporating an opening for the measurement beam of the sensor, movable element shaped as hollow spherical segment of two bases cut off at opposite ends with openings for the measurement beam of the sensor. The upper cover and central cover are interlocked using a dismountable link, so that the upper cover opening for measurement beam of the sensor and the central cover opening for measurement beam of the sensor are aligned above each other and the space between the upper cover and the central cover is adapted, by size and shape, to rotary articulated placement of a movable element below the upper cover. The upper cover allows for anchoring of the movable element, shaped as spherical segment, to the central cover. The movable element located within the space between the upper cover and central cover can be rotated in an articulated fashion. As needed, the position of the movable element is set in a direction of choice and the movable element is simply anchored in this position by completely closing the dismountable link so that the link is fixed and movement of the movable element is limited even under rough treatment. A simple release of the dismountable link allows for re-adjustment of the movable element into a different direction and this setting is fixated again by firm interlocking of the dismountable link.

The central cover is equipped with a cap, which is interlocked with the central cover in an openable or dismountable manner. Dismountable connection of the cap and the central cover can be realized using screw-bolts. Equipment of the central cover with a cap is preferable mainly because it facilitates insertion and replacement of the sensor, easier and more reliable attachment of the sensor in the central cover, and also for protection of the sensor from contamination.

It is preferable, from the point of cover use, if the cap represents the bottom face of the central cover, which is positioned against the face of the central cover that carries the upper cover, this bottom face also being adapted for attachment to the object. For instance, openings may be fitted for attachment to the object using screw-bolts.

There is a recess on the upper cover. The recess allows for easier manipulation of the movable element or achieving a larger range of measurement beam directions.

It is preferable, mainly when mounting the sensor in objects of the same type, if the movable element includes a scale for simple and rapid setting of the sensor beam direction. The scale can be used by the assembly workers for simple orientation during sensor fitting so that unified beam direction is achieved.

In certain cases of using the case according to this technical solution, it is preferable that the link between the central cover and the upper cover is waterproof. Waterproofness can be achieved by inserting a gasket, such as O-ring.

The sensor case is made of high-strength polyamide and optical fibers, which is preferable from the point of the sensor placement and use.

The submitted technical solution provides the following improvements of the known state of the art:
- Case according to this technical solution allows for changing the direction of the measurement beam around all three axes X, Y, and Z.
- Sensor placed in the case according to this technical solution can be mounted onto the side walls of the object without need for mounting bracket because the movable element, shaped as spherical segment, is easily adjustable so that it ensures direction of the measurement beam to the middle of the container, regardless of the way the sensor is attached to the side of the container.
- The sensor can be mounted on any part of the upper portion of the object because in case of adverse reflection of the measurement bean it can be redirected to a more appropriate place within the object through simple re-positioning of the movable element.
- No need for the mounting bracket will improve the transmission and reception properties of the sensor as no shielding of radio frequencies occurs.
- This is cost-effective solution, reducing the cost of content measurement inside objects by the cost of mounting brackets or other external devices.

### Description of Figures

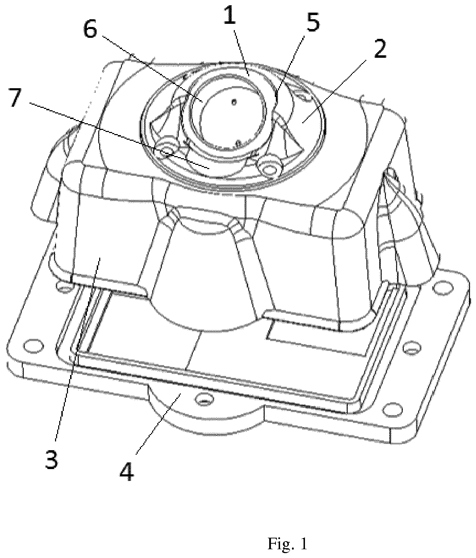

Fig. 1 represents sensor case according to the present invention.

### Examples of Embodiments

The invention is further disclosed in more detail in following non-limiting examples of embodiments.

### Example No. 1

A sensor case following an example of embodiment is shown in the Fig. 1. The sensor case is intended for adjustable placement of the sensor, mostly for content measurement inside objects, and includes upper cover 2 with an opening 5 for measurement beam of the sensor, central cover 3 intended for storage of the sensor with an opening 5 for the measurement beam of the sensor, movable element 1 shaped as hollow spherical segment of two bases cut off at opposite ends with openings 6 for the measurement beam of the sensor. The upper cover 2 and the central cover 3 are interlocked via a dismountable link, so that the opening 5 for the measurement beam of the sensor in the upper cover 2 and the opening 5 for the measurement beam of the sensor in the central cover 3 are aligned above each other and the space between the upper cover 2 and the central cover 3 is adapted, in its size and shape, for rotary articulated placement of the movable element 1 under the upper cover 2.

Between the upper cover 2 and the central cover 3, a movable element 1 is placed shaped as spherical segment. The opening 5 of the upper cover 2 is circular with a recess 7, and the diameter of the opening 5 is smaller than the diameter of the section across the center of the movable element. This ensures that after placing the movable element 1 between the central cover 3 and upper cover 2, the movable element remains in place and cannot fall out. The movable element 1 located within the space between the upper cover 2 and the central cover 3 can be rotated in an articulated fashion. As needed, the position of the movable element 1 is set so that the opening 6 is oriented in the desired direction and the movable element 1 is simply anchored in this position by completely closing the dismountable link so that the link is fixed and movement of the movable element is limited even under rough treatment. A simple release of the dismountable link allows for movement and re-adjustment of the movable element 1 with re-direction of the opening 6 for the measurement beam of the sensor and this setting is fixated again by firm interlocking of the dismountable link.

The central cover 3 holds the sensor. The central cover 3 is equipped with a cap 4, which is interlocked with the central cover 3 in a dismountable fashion. Dismountable connection between the cap 4 and the central cover 3 can be realized using screw-bolts. The cap 4 serves for insertion and replacement of the sensor, for easier and better attachment of the sensor within the central cover 3 as well as protection of the sensor from contamination.

In this example of embodiment, the cap 4 represents the bottom face of the central cover 3, which is positioned against the face of the central cover 3 that carries the upper cover 2 and this bottom face also contains openings for attachment to the object using screw-bolts. Firm link between the case and the object can also be achieved by other common connecting techniques but the most preferable is dismountable link, which allows for removal of the case from the object when needed.

The upper cover 2 contains a recess 7. The recess allows for easier manipulation of the movable element and also allows for a larger range of measurement beam direction.

There is a scale painted on the movable element 1, this specific example of embodiment uses serigraphy. This is used mainly when mounting the sensor for simpler and faster adjustment of the sensor beam direction. The scale can be used by the assembly workers for simple orientation during sensor fitting so that unified beam direction is achieved.

The link between the central cover 3 and the upper cover 2 is waterproof. Waterproofness is achieved by inserting a gasket, such as O-ring.

The sensor case is made of high-strength polyamide and optical fibers, which is preferable from the point of the sensor placement and use.

### Example No. 2

Identical with the example of embodiment 1, with difference, that the cap 4 is connected with the central cover 3 openable by hinges and a valve.

### Industrial applicability

The industrial applicability is obvious. The technical solution can be used to/for content measurement of objects, for example containers with liquid or solid contents, such as garbage cans, water reservoirs, oil reservoirs, hoppers, silos, containers etc.

### Reference signs

- 1: Movable element
- 2: Upper cover
- 3: Central cover
- 4: Cap
- 5: The opening of the upper cover and the central cover
- 6: The opening of the movable element
- 7: Recess

## Claims

1. Sensor case intended for adjustable positioning of the sensor, mainly for measurement of object content **characterized in that** it comprises upper cover (2) with an opening (5) for measurement beam of the sensor, central cover (3) intended for storage of the sensor with an opening (5) for the measurement beam of the sensor, movable element (1) shaped as hollow spherical segment with openings (6) for the measurement beam of the sensor, wherein the upper cover (2) and the central cover (3) are interlocked via a dismountable link, so that the opening (5) for the measurement beam of the sensor of the upper cover (2) and the opening (5) for the measurement beam of the sensor of the central cover (3) are aligned above each other and the space between the upper cover (2) and the central cover (3) is adapted, in its size and shape, for rotary articulated placement of the movable element (1) under the upper cover (2).

2. Sensor case according to claim 1, **characterized in that** the movable element (1) shaped as hollow spherical segment of two bases cut off at opposite places and opening (6) for measurement beam of the sensor is formed by this cutoff.

3. Sensor case according to any of claims 1 and 2, **characterized in that** the central cover (3) is equipped with the cap (4), which is interlocked with the central cover (3) in an openable or dismountable manner.

4. Sensor case according to claim 3, **characterized in that** the cap (4) is the bottom face of the central cover (3) which is positioned against the face of the central cover (3) that carries the upper cover (2) and this bottom face is also being adapted for attachment to the object.

5. Sensor case according to any of claims 1 to 4, **characterized in that** the upper cover (2) contains the recess (7).

6. Sensor case according to any of claims 1 to 5, **characterized in that** the movable element (1) is equipped with the scale.

7. Sensor case according to any of claims 1 to 6, **characterized in that** between the central cover (3) and the upper cover (2) is the gasket, preferably O-ring.

8. Sensor case according to any of claims 1 to 7, **characterized in that** the dismountable connection between the cap (4) and the central cover (3) is realized using screw-bolts.

9. Sensor case according to any of claims 1 to 8, **characterized in that** is made of polyamide and optical fibers.
